# EUROPÄISCHE PATENTSCHRIFT

(11) **EP 3 495 649 B1**
(45) Veröffentlichungstag und Bekanntmachung des Hinweises auf die Patenterteilung: **07.04.2021**
(21) Anmeldenummer: 18205562.4
(22) Anmeldetag: 12.11.2018
(51) Int. Cl.: F02D 41/24, F02D 41/18, F02D 41/00, F02D 41/08, F02D 41/22, F02D 41/02, F02D 31/00

(54) **VERFAHREN ZUM ABGLEICH EINER VON EINEM LUFTMASSENSENSOR EINES VERBRENNUNGSMOTORS ERFASSTEN MESSGRÖSSE**
METHOD FOR COMPARING A MEASURED QUANTITY RECORDED BY AN AIR MASS SENSOR OF A COMBUSTION ENGINE
PROCÉDÉ DE COMPENSATION D'UNE VALEUR MESURÉE PAR UN CAPTEUR DE MESURE D'AIR D'UN MOTEUR À COMBUSTION INTERNE

(30) Priorität: 01.12.2017 DE 102017221624
(43) Veröffentlichungstag der Anmeldung: 12.06.2019
(73) Patentinhaber: Bayerische Motoren Werke Aktiengesellschaft, 80809 München (DE)
(72) Erfinder: Postlmayr, Karl, 4451 Garsten (AT)

(56) Entgegenhaltungen:
- EP-A1- 2 390 490
- DE-A1-102005 004 319
- DE-A1-102005 042 690
- DE-T5-112009 000 324
- DE-T5-112009 000 324
- FR-A3- 2 953 561
- FR-A3- 2 953 564

## Beschreibung

Die Erfindung betrifft ein Verfahren zum Abgleich einer von einem Luftmassensensor eines Verbrennungsmotors erfassten Messgröße für einen Luftmassenstrom mit einem von einer Steuereinrichtung des Verbrennungsmotors errechneten Wert für den durch den Verbrennungsmotor strömenden Luftmassenstrom, sowie eine Steuereinrichtung eines Verbrennungsmotors zum Durchführen eines solchen Verfahrens.

Das Abgleichen einer von einem Luftmassensensor eines Verbrennungsmotors erfassten Messgröße für einen Luftmassenstrom mit einem von einer Steuereinrichtung des Verbrennungsmotors errechneten Wert für die durch den Verbrennungsmotor strömende Luftmasse ist bekannt. Ein solches Verfahren wird beispielsweise eingesetzt, um den Luftmassensensor zu kalibrieren, oder eine Verschmutzung oder sonstige Betriebsstörung desselben festzustellen. Dabei wird der von einer Steuereinrichtung des Verbrennungsmotors berechnete Modellwert für den Massenstrom der angesaugten Luft, der insbesondere aus dem Hubvolumen und der Drehzahl, unter Berücksichtigung des Lastpunkts und weiterer Einflussfaktoren errechnet wird, mit dem Messwert des insbesondere im Ansaugtrakt des Verbrennungsmotors angeordneten Luftmassensensors abgeglichen.

In der deutschen Offenlegungsschrift DE 197 50 191 A1 wird beispielsweise ein Verfahren und eine Vorrichtung zur Überwachung der Lasterfassung eines Verbrennungsmotors vorgeschlagen. Dabei wird eine Messgröße für einen Luftmassenstrom erfasst und ein Wert für den Luftmassenstrom auf der Basis eines Drosselklappenstellungsignals berechnet. Die beiden Signale werden zur Fehlerüberwachung miteinander verglichen, wobei ein Fehler erkannt wird, wenn die beiden Signale unzulässig voneinander abweichen. Aus der Veröffentlichung DE 11 2009 000 324 T5 ist ein Verfahren zum Abgleichen eines Luftmassenflusssensors einer Motoranordnung eines Kraftfahrzeugs bekannt, bei welchem ein durch einen Luftmassenstromsensor ermittelter Luftmassenstrom gesteuert wird, zum Erzeugen eines Luftmassenstroms, der an einen Motor abzugeben ist, wobei ein Abgleichwert k auf der Grundlage eines von dem Luftmassenstromsensor bestimmten Luftmassenstromwerts für den wenigstens einen Luftmassenstrom gebildet wird, um so das Abgleichen des Luftmassenstromsensors zu ermöglichen. Ähnliche Verfahren zum Abgleich des Luftmassenstromsensors sind auch aus der deutschen Offenlegungsschrift DE 10 2005 004 319 A1 und den französischen Gebrauchsmusterschriften FR 2 953 561 A3 und FR 2 953 564 A3 bekannt.

Bei Motoren mit Abgasrückführung ist es zum Abgleich des vom Luftmassensensor erfassten Werts mit dem Modellwert für die durch den Verbrennungsmotor strömende Luftmasse günstig, die Abgasrückführung während des Abgleichs deutlich zu reduzieren oder sogar ganz auszusetzen, um eine größere Genauigkeit des Abgleichs zu erreichen. Da der von der Abgasrückführung zurückgeführte Abgasstrom dem Ansaugtrakt stromabwärts vom Luftmassensensor zugeführt wird, ergibt sich bei eingeschalteter Abgasrückführung eine Abweichung zwischen dem erfassten und dem tatsächlich durch den Motor strömenden Luftmassenstrom. Die eingesetzten Modellrechnungen berücksichtigen zwar den Anteil des rückgeführten Abgases, allerdings ist der berechnete Modellwert umso genauer, je geringer der Anteil des rückgeführten Abgases ist. Bei reduzierter oder ausgesetzter Abgasrückführung ist die Korrelation von erfasstem mit errechnetem Wert für den Luftmassenstrom höher, ein Abgleich dieser Werte ist folglich mit höherer Genauigkeit möglich. Gleichzeitig ist es vorteilhaft, einen Abgleich eines erfassten mit einem errechneten Wert für den Luftmassenstrom bei unterschiedlichen Lastpunkten mit über den Lastbereich deutlich variierenden Luftmassenströmen durchzuführen, um ein Ergebnis über die Funktion des Luftmassensensors über einen größeren Lastbereich des Verbrennungsmotors aus dem Abgleich zu erhalten und diesen auch über einen größeren Lastbereich kalibrieren zu können.

Hiervon ausgehend stellt sich die Erfindung die Aufgabe, ein verbessertes Verfahren zum Abgleich einer von einem Luftmassensensor eines Verbrennungsmotors erfassten Messgröße für einen Luftmassenstrom mit einem von einer Steuereinrichtung des Verbrennungsmotors errechneten Wert für den Luftmassenstrom vorzuschlagen. Ferner soll eine Steuereinrichtung eines Verbrennungsmotors zum Durchführen eines Verfahrens zum Abgleich einer von einem Luftmassensensor eines Verbrennungsmotors erfassten Messgröße für einen Luftmassenstrom mit einem von der Steuereinrichtung errechneten Wert für den Luftmassenstrom vorgeschlagen werden. Dies wird erfindungsgemäß durch die Lehre der unabhängigen Ansprüche erreicht. Vorteilhafte Ausbildungen der Erfindung sind Gegenstand der Unteransprüche.

Zur Lösung der Aufgabe wird ein Verfahren zum Abgleich einer von einem Luftmassensensor eines Verbrennungsmotors erfassten Messgröße für einen Luftmassenstrom mit dem von einer Steuereinrichtung des Verbrennungsmotors errechneten Wert für den durch den Verbrennungsmotor strömenden Luftmassenstrom vorgeschlagen, wobei der Verbrennungsmotor eine Abgasrückführeinrichtung aufweist, welche Abgas aus dem Abgastrakt abzweigt und stromabwärts des Luftmassensensors in den Ansaugtrakt zurückführt. Das Verfahren weist die folgenden Verfahrensschritte auf:
- Betreiben des Verbrennungsmotors in einer Sonderbetriebsphase, in welcher die Emissionsvorgaben mit reduzierter Abgasrückführung erreichbar sind, wobei die Abgasrückführung ohne Beeinträchtigung der Einhaltung von Emissionsvorgaben für die Dauer des Abgleichs reduzierbar ist,
- Reduzieren der Abgasrückführung,
- Erfassen der Messgröße durch den Luftmassensensor, die dem Luftmassenstrom entspricht, der dem Verbrennungsmotor zugeführt wird, und
- Abgleichen der erfassten Messgröße mit dem von der Steuereinrichtung errechneten Wert für den durch den Motor strömenden Luftmassenstrom.

Es wird vorgeschlagen, den Verbrennungsmotor in einer Sonderbetriebsphase zu betreiben, in welcher die Emissionsvorgaben für den Verbrennungsmotor ausweislich des Motorkennfeldes oder aufgrund sonstiger Einflussfaktoren während des Betriebs des Verbrennungsmotors mit reduzierter Abgasrückführung erreichbar sind. In einer solchen Sonderbetriebsphase kann die Abgasrückführung ohne Beeinträchtigung der Einhaltung von Emissionsvorgaben für die Dauer des Abgleichs reduziert werden. Unter reduzierter Abgasrückführung wird im Sinne der Erfindung auch eine Abgasrückführung verstanden, die so weit reduziert ist, dass kein Abgas mehr vom Abgastrakt in den Ansaugtrakt zurück geführt wird. Die Abgasrückführung ist in diesem Fall ausgesetzt, die Abgasrückführeinrichtung ausgeschaltet.

Während einer Reduzierung und insbesondere während einem Aussetzen der Abgasrückführung entspricht der von der Steuereinrichtung errechnete Luftmassenstrom durch den Verbrennungsmotor unter Berücksichtigung der aktuellen Abgasrückführrate im Wesentlichen der vom Luftmassensensor erfassten Messgröße, sodass ein Abgleich zwischen der vom Luftmassensensor erfassten Messgröße für den Luftmassenstrom und dem von der Steuereinrichtung errechneten Wert möglich ist, um beispielsweise eine Kalibrierung des Luftmassensensors durchzuführen, oder eine Funktionsbeeinträchtigung des Luftmassensensors festzustellen. Ergibt sich bei dem Abgleich eine Abweichung der vom Luftmassensensor erfassten Messgröße von dem von der Steuereinrichtung errechneten Wert, so kann eine entsprechende Kalibrierung des Luftmassensensors erfolgen oder auf eine Fehlfunktion, die beispielsweise durch eine Verschmutzung des Sensors verursacht ist, geschlossen werden.

Bei einer Ausführungsform des Verfahrens wird die Abgasrückführung auf einen Wert reduziert, der weniger als 50%, insbesondere weniger als 20%, insbesondere weniger als 10% oder weniger als 5% des im entsprechenden Betriebsbereich, wenn kein Abgleich durchgeführt wird, vorgesehen Werts für die Abgasrückführung entspricht. Alternativ wird die Abgasrückführung abgeschaltet und damit auf einen Wert reduziert, der 0% vom im vorliegenden Betriebsbereich eigentlich vorgesehen Wert für die Abgasrückführung entspricht. Durch die Reduzierung der Abgasrückführung kann mit bekannten Rechenmodellen eine umso höhere Genauigkeit des Abgleichs erreicht werden, je stärker die Reduzierung der Abgasrückführung ist. Die höchste Genauigkeit ist daher im Falle eines Aussetzen der Abgasrückführung, also dem Abschalten der Abgasrückführeinrichtung erreichbar. Insbesondere ist ein Aussetzen der Abgasrückführung bei gleichzeitigem Erreichen der Emissionsvorgaben nur in begrenzten Sonderbetriebsphasen und insbesondere nicht bei jedem Verbrennungsmotor möglich.

Bei einer Ausführungsform des Verfahrens wird der dem Verbrennungsmotor zugeführte Luftmassenstrom während der Reduzierung der Abgasrückführeinrichtung zum Verringern der Emissionen des Verbrennungsmotors geregelt. Aufgrund des geringeren Anteils des Abgases erhöht sich nach dem Reduzieren der Abgasrückführung der Sauerstoffanteil der Ladeluft des Verbrennungsmotors. Eine Regelung und insbesondere Reduzierung des zugeführten Luftmassenstroms ist daher vorteilhaft, um insbesondere einem Anstieg von Stickoxiden im Abgas entgegenzuwirken.

Bei einer Ausführungsform des Verfahrens wird der dem Verbrennungsmotor zugeführte Luftmassenstrom während des Abgleichs auf einen vorbestimmten Luftmassenstrom geregelt. Zusätzlich zur Emissionsreduzierung während der Reduzierung der Abgasrückführung ist eine Regelung des dem Verbrennungsmotor zugeführten Luftmassenstroms während der Durchführung des Abgleichs des gemessenen mit dem berechneten Wert für den Luftmassenstrom zweckmäßig, um ein aussagefähiges Ergebnis des Abgleichs zu erhalten. So kann der Abgleich während einer Regelung der Ansaugluft auf einen vorbestimmten Luftmassenstrom unter definierten und insbesondere auch wiederholbaren Randbedingungen durchgeführt werden.

Bei einer Ausführungsform des Verfahrens stellt der Leerlaufbetrieb eine Sonderbetriebsphase des Verbrennungsmotors dar. Während des Leerlaufbetriebs eines Verbrennungsmotors herrschen insbesondere aufgrund der geringen Last häufig günstige Verbrennungsbedingungen, so dass die Emissionsvorgaben mit einer reduzierten Abgasrückführung erreichbar sind. Nach dem Reduzieren der Abgasrückführung steigt aufgrund der Verringerung des rückgeführten Abgases der Luftmassenstrom der Ansaugluft. Bei der Durchführung des Abgleichs ist es daher vorteilhaft, die zugeführte Luft zu drosseln und einen Sollwert für den Luftmassenstrom vorzugeben. Dies ermöglicht das Durchführen des Abgleichs unter geeigneten und wiederholbaren Randbedingungen.

Bei einer Ausführungsform des Verfahrens weist der Verbrennungsmotor eine Abgasnachbehandlungseinrichtung mit wenigstens einem Partikelfilter zum Sammeln von bei der Verbrennung gebildetem Ruß auf, welcher während einer Regenerationsphase des Partikelfilters abgebrannt wird. Auch die Regenerationsphase des Partikelfilters kann vorteilhaft als Sonderbetriebsphase des Verbrennungsmotors für die Durchführung des vorgeschlagenen Verfahrens genutzt werden. Für das Abbrennen von Ruß sind während des Regenerationsbetriebs des Partikelfilters hohe Temperaturen erforderlich, so dass eine mit einer Abgasrückführung erreichbare geringere Abgastemperatur während der Regenerationsphase des Partikelfilters keinen Vorteil bringt. Entsprechend ist das Erreichen der Emissionsvorgaben während der Regenerationsphase des Partikelfilters auch bei reduzierter oder ausgesetzter Abgasrückführung möglich. Auch während des Regenerationsbetriebs, der üblicherweise an höheren Lastpunkten des Verbrennungsmotors erfolgt, steigt während einer Reduzierung der Abgasrückführung der Luftmassenstrom der Ansaugluft. So ist es auch hier bei der Durchführung des Abgleichs vorteilhaft, die zugeführte Luft zu drosseln und einen Sollwert für den Luftmassenstrom vorzugeben. Dies ermöglicht das Durchführen des Abgleichs unter geeigneten und wiederholbaren Randbedingungen.

Sonderbetriebsphasen wie beispielsweise der Regenerationsbetrieb und/ oder der Leerlauf finden an unterschiedlichen Lastpunkten und damit in Betriebsphasen mit unterschiedlichen Luftmassenströmen durch einen Verbrennungsmotor statt. Dadurch ist es möglich, einen Abgleich der Messgröße des Luftmassensensors mit dem errechneten Wert zu unterschiedlichen Lastpunkten des Verbrennungsmotors durchzuführen, wodurch eine Kalibrierung und/ oder Funktionsprüfung eines Luftmassensensors mit unterschiedlichen Luftmassenströmen möglich ist und damit auch eine Kalibrierung und/ oder Funktionsprüfung anhand unterschiedlicher, während des Betriebs des Verbrennungsmotors auftretender Luftmassenströme durchführbar ist.

Zur Lösung der Aufgabe wird ferner eine Steuereinrichtung eines Verbrennungsmotors vorgeschlagen, zum Durchführen eines Verfahrens zum Abgleich einer von einem Luftmassensensor eines Verbrennungsmotors erfassten Messgröße für einen Luftmassenstrom mit dem von der Steuereinrichtung errechneten Wert für den Luftmassenstrom, insbesondere mit den vorausgehend beschriebenen Verfahrensschritten. Die Steuereinrichtung ist dabei eingerichtet:
- den Verbrennungsmotor in einer Sonderbetriebsphase zu betreiben, in welcher Emissionsvorgaben mit reduzierter Abgasrückführung erreichbar sind, wobei die Abgasrückführung ohne Beeinträchtigung der Einhaltung von Emissionsvorgaben für die Dauer des Abgleichs reduzierbar ist,
- die Abgasrückführung zu reduzieren,
- die durch den Luftmassensensor erfasste Messgröße einzulesen, die dem Luftmassenstrom entspricht, der dem Verbrennungsmotor zugeführt wird,
- einen Wert für den durch den Motor strömenden Luftmassenstrom während der Sonderbetriebsphase des Verbrennungsmotors zu errechnen und
- die erfasste Messgröße mit dem von der Steuereinrichtung errechneten Wert für den durch den Motor strömenden Luftmassenstrom abzugleichen.

Die Steuereinrichtung ist zum Durchführen eines solchen Verfahrens zum Abgleichen eines von der Steuereinrichtung errechneten Werts für den Luftmassenstrom mit einer vom Luftmassensensor erfassten Messgröße in geeigneter Weise mit dem Verbrennungsmotor und daran angeordneten Datenerfassungseinrichtungen verbunden. So hat sie Zugriff auf die zum Durchführen des Verfahrens erforderlichen Daten des Verbrennungsmotors und kann zum Durchführen der erforderlichen Steuermaßnahmen am Verbrennungsmotor steuernd auf die Einrichtungen des Verbrennungsmotors einwirken.

Insbesondere ist in der Steuereinrichtung oder in einem mit der Steuereinrichtung verbundenen Datenspeicher das Modell zum Berechnen des Werts für den durch den Motor strömenden Luftmassenstrom gespeichert. Zum Berechnen dieses Werts liest die Steuereinrichtung die jeweils aktuellen Werte der hierfür erforderlichen Daten bzw. Kenngrößen des Verbrennungsmotors ein, die der Steuereinrichtung von anderen Einrichtungen des Verbrennungsmotors, insbesondere von am Motor angeordneten Datenerfassungseinrichtungen wie Sensoren zur Verfügung gestellt werden.

Die weiteren die Steuereinrichtung betreffenden Begriffe und Maßnahmen werden entsprechend der Ausführungen zum vorausgehend beschriebenen Verfahren verstanden.

Bei einer Ausführungsform der Steuereinrichtung ist diese eingerichtet, den Luftmassenstrom, der dem Verbrennungsmotor während der Reduzierung der Abgasrückführung zugeführt wird, zum Verringern der Emissionen des Verbrennungsmotors zu regeln. Wie bereits vorausgehend zum Verfahren ausgeführt wurde, erhöht sich durch den nach dem Reduzieren der Abgasrückführung verringerten Abgasanteil der Sauerstoffanteil in der Ladeluft des Verbrennungsmotors. Wird der zugeführte Luftmassenstrom gedrosselt bzw. auf einen vorbestimmten Wert reduziert, so kann dadurch insbesondere ein Anstieg von Stickoxiden im Abgas vermieden bzw. verringert werden.

Bei einer Ausführungsform der Steuereinrichtung ist diese eingerichtet, den Luftmassenstrom, der dem Verbrennungsmotor zugeführt wird, während des Abgleichs auf einen vorbestimmten Luftmassenstrom zu regeln. Wie ebenfalls vorausgehend bereits zum Verfahren ausgeführt wurde, ist eine Regelung des zugeführten Luftmassenstroms während der Durchführung des Abgleichs vorteilhaft, um ein besseres Ergebnis des Abgleichs zu erhalten. So kann während einer Regelung der Ansaugluft der Abgleich unter definierten und insbesondere auch wiederholbaren Randbedingungen durchgeführt werden.

Zur Lösung der Aufgabe wird ferner ein Kraftfahrzeug mit einem Verbrennungsmotor und einer wie vorausgehend beschriebenen Steuereinrichtung zum Durchführen des ebenso vorausgehend beschriebenen Verfahrens vorgeschlagen. Insbesondere bei Verbrennungsmotoren von Kraftfahrzeugen gelten strenge Emissionsvorgaben, welche eine Reduzierung der Abgasrückführung für einen Abgleich einer vom Luftmassensensor erfassten Messgröße mit einem hierfür errechneten Wert außerhalb von Sonderbetriebsphasen des Verbrennungsmotors erschweren.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1: eine schematische Darstellung einer beispielhaften Ausführungsform des Verbrennungsmotors mit Steuereinrichtung zum Durchführen des erfindungsgemäßen Verfahrens; und
- Fig. 2: eine beispielhafte schematische Darstellung der Schritte des erfindungsgemäßen Verfahrens.

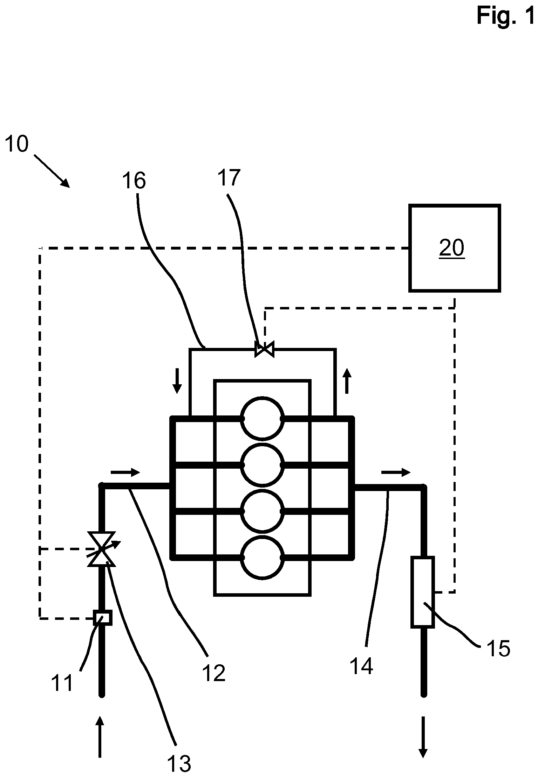

Fig. 1 zeigt eine schematische Darstellung einer beispielhaften Ausführungsform des Verbrennungsmotors 10 mit einer Steuereinrichtung 20 zum Durchführen des vorgeschlagenen Verfahrens zum Abgleich einer von einem Luftmassensensor 11 des Verbrennungsmotors 10 erfassten Messgröße für einen Luftmassenstrom mit dem von der Steuereinrichtung 20 errechneten Wert für den Luftmassenstrom. Im Ansaugtrakt 12 ist ein regelbares Drosselventil 13 angeordnet, mittels welchem der dem Verbrennungsmotor 10 zugeführte Luftmassenstrom geregelt werden kann. Im Abgastrakt 14 ist ein Partikelfilter 15 angeordnet, der zum Sammeln von bei der Verbrennung gebildetem Ruß dient, und diesen in zeitlichen Abständen bei einem jeweiligen Regenerationsbetrieb abbrennt. Zwischen dem Ansaugtrakt 12 und dem Abgastrakt 14 ist eine Abgasrückführeinrichtung 16 angeordnet, welche ein Abgasrückführventil 17 aufweist, mittels welchem die Rückführung von Abgas einstellbar ist und in dessen Schließstellung die Rückführung von Abgas unterbrochen ist.

Zur Durchführung des Verfahrens ist eine Steuereinrichtung 20 vorgesehen, welche wenigstens mit dem Luftmassensensor 11, dem Drosselventil 13, dem Partikelfilter 15 und dem Abgasrückführventil 17 verbunden ist, um von diesen Einrichtungen zur Verfügung gestellte Daten oder Signale einzulesen und/ oder an diese Einrichtungen Signale zum Steuern derselben zu senden.

Die Steuereinrichtung 20 ist beispielsweise auch eingerichtet, den Verbrennungsmotor 10 in einer Sonderbetriebsphase zu betreiben, in welcher mit reduzierter Abgasrückführung die Emissionsvorgaben erreichbar sind. Die Steuereinrichtung 20 ist zusätzlich eingerichtet, die Abgasrückführeinrichtung 16 mithilfe des Abgasrückführventils 17 zu regeln und dabei die Abgasrückführung zu reduzieren. Die Steuereinrichtung 20 liest nach dem Reduzieren der Abgasrückführung die vom Luftmassensensor 11 erfasste Messgröße für den Luftmassenstrom ein. Zusammen mit dem rückgeführten Abgas bildet dieser Luftmassenstrom den Luft-Abgasmassenstrom, der dem Verbrennungsmotor 10 zum Zeitpunkt des Abgleichs zugeführt wird. Bei dem vorgeschlagenen Verfahren wird während einer Sonderbetriebsphase des Verbrennungsmotors 10 von der Steuereinrichtung 20 ein Wert für den zum Zeitpunkt des Abgleichs durch den Verbrennungsmotor 10 strömenden Luftmassenstrom errechnet und der von Steuereinrichtung 20 errechnete Wert mit der vom Luftmassensensor 11 erfassten Messgröße für den durch den Verbrennungsmotor strömenden Luftmassenstrom abgeglichen. Aufgrund der Kenntnis einer Abweichung und deren Höhe kann beispielsweise eine Kalibrierung des Luftmassensensors 11 vorgenommen oder eine Fehlfunktion des Luftmassensensors 11 erkannt werden.

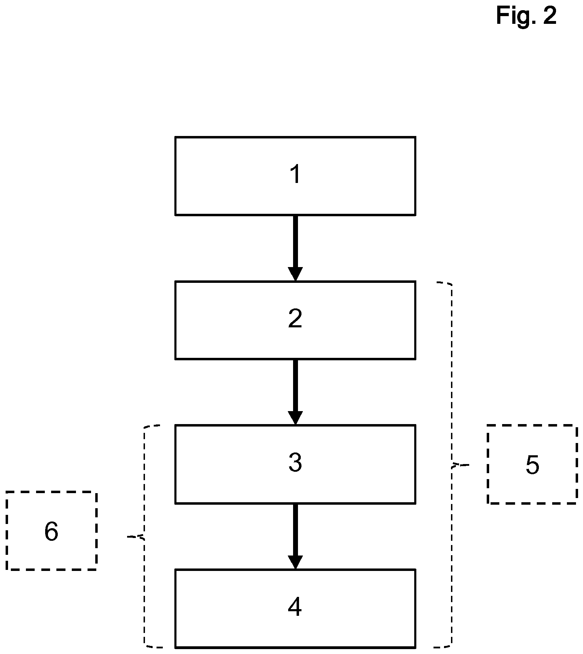

Fig. 2 zeigt eine beispielhafte schematische Darstellung der Schritte des erfindungsgemäßen Verfahrens, welches beispielsweise zum Kalibrieren eines Luftmassensensors 11 und/ oder zur Funktionsprüfung des Luftmassensensors 11 anwendbar ist. Im Schritt 1 wird der Verbrennungsmotor in einer Sonderbetriebsphase betrieben, in welcher die Emissionsvorgaben mit reduzierter Abgasrückführung erreichbar sind. Beim Vorliegen einer solchen Sonderbetriebsphase wird im Schritt 2 die Abgasrückführung durch die Abgasrückführeinrichtung 16 mithilfe des Abgasrückführventils 17 reduziert, woraufhin durch den Ansaugtrakt 12 vom Luftmassensensor 11 erfasste Luft und ein reduzierter Anteil rückgeführtes Abgas zum Verbrennungsmotor 10 strömt. Im Schritt 3 wird nun vom Luftmassensensor 11 die Messgröße für den Luftmassenstrom erfasst. Im Schritt 4 erfolgt nun ein Abgleich der erfassten Messgröße mit dem von der Steuereinrichtung 20 errechneten Wert für den durch den Verbrennungsmotor 10 strömenden Luftmassenstrom. Eine Abweichung der vom Luftmassensensor 11 erfassten Messgröße von dem von der Steuereinrichtung 20 errechneten Wert des Rechenmodells kann zum Kalibrieren des Luftmassensensors 11 verwendet werden oder auch zum Erkennen einer Fehlfunktion des Luftmassensensors 11.

Bei dem vorgeschlagenen Verfahren kann optional in einem Schritt 5, welcher parallel zur Durchführung der Schritte 2 bis 4 erfolgt, der dem Verbrennungsmotor 10 zugeführte Luftmassenstrom mithilfe des Drosselventils 13 zum Verringern der Emissionen des Verbrennungsmotors 10 geregelt werden.

Ferner kann bei dem vorgeschlagenen Verfahren optional in einem Schritt 6, welcher parallel zur Durchführung der Schritte 3 und 4 erfolgt, der dem Verbrennungsmotor 10 zugeführte Luftmassenstrom auf einen vorbestimmten Luftmassenstrom geregelt werden, um die Schritte 3 und 4 unter vordefinierten Randbedingungen für den Luftmassenstrom durchzuführen.

### Bezugszeichenliste

- 1 bis 6: Schritte des Verfahrens
- 10: Verbrennungsmotor
- 11: Luftmassensensor
- 12: Ansaugtrakt
- 13: Drosselventil
- 14: Abgastrakt
- 15: Partikelfilter
- 16: Abgasrückführeinrichtung
- 17: Abgasrückführventil
- 20: Steuereinrichtung

## Patentansprüche

1. Verfahren zum Abgleich einer von einem Luftmassensensor (11) eines Verbrennungsmotors (10) erfassten Messgröße für einen Luftmassenstrom mit dem von einer Steuereinrichtung (20) des Verbrennungsmotors (10) errechneten Wert für den durch den Verbrennungsmotor (10) strömenden Luftmassenstrom, wobei der Verbrennungsmotor (10) eine Abgasrückführeinrichtung (16) aufweist, welche Abgas aus einem Abgastrakt (14) abzweigt und stromabwärts des Luftmassensensors (11) in einen Ansaugtrakt (12) zurückführt, mit den Verfahrensschritten:
- Betreiben des Verbrennungsmotors (10) in einer Sonderbetriebsphase, in welcher die Emissionsvorgaben mit reduzierter Abgasrückführung erreichbar sind, wobei die Abgasrückführung ohne Beeinträchtigung der Einhaltung von Emissionsvorgaben für die Dauer des Abgleichs reduzierbar ist,
- Reduzieren der Abgasrückführung,
- Erfassen der Messgröße durch den Luftmassensensor (11), die dem Luftmassenstrom entspricht, der dem Verbrennungsmotor (10) zugeführt wird, und
- Abgleichen der erfassten Messgröße mit dem von der Steuereinrichtung (20) errechneten Wert für den durch den Verbrennungsmotor (10) strömenden Luftmassenstrom.

2. Verfahren nach Anspruch 1, **dadurch gekennzeichnet, dass** die Abgasrückführung auf einen Wert reduziert wird, der weniger als 50%, insbesondere weniger als 20%, insbesondere weniger als 10% oder weniger als 5% des im vorliegenden Betriebsbereich vorgesehen Wert für die Abgasrückführung entspricht, oder dass die Abgasrückführung abgeschaltet wird.

3. Verfahren nach einem der vorhergehenden Ansprüche, **dadurch gekennzeichnet, dass** der dem Verbrennungsmotor (10) zugeführte Luftmassenstrom während der Reduzierung der Abgasrückführung zum Verringern der Emissionen des Verbrennungsmotors (10) geregelt wird.

4. Verfahren nach einem der vorhergehenden Ansprüche, **dadurch gekennzeichnet, dass** der dem Verbrennungsmotor (10) zugeführte Luftmassenstrom während des Abgleichs auf einen vorbestimmten Luftmassenstrom geregelt wird.

5. Verfahren nach einem der vorhergehenden Ansprüche, **dadurch gekennzeichnet, dass** der Leerlaufbetrieb eine Sonderbetriebsphase des Verbrennungsmotors (10) darstellt.

6. Verfahren nach einem der vorhergehenden Ansprüche, **dadurch gekennzeichnet, dass** der Verbrennungsmotor (10) eine Abgasnachbehandlungseinrichtung mit wenigstens einem Partikelfilter (15) zum Sammeln von bei der Verbrennung gebildetem Ruß aufweist, welcher während einer Regenerationsphase des Partikelfilters (15) abgebrannt wird, wobei die Regenerationsphase des Partikelfilters (15) eine Sonderbetriebsphase des Verbrennungsmotors (10) darstellt.

7. Steuereinrichtung eines Verbrennungsmotors zum Durchführen eines Verfahrens zum Abgleich einer von einem Luftmassensensor (11) eines Verbrennungsmotors (10) erfassten Messgröße für einen Luftmassenstrom mit dem von der Steuereinrichtung (20) errechneten Wert für den Luftmassenstrom insbesondere nach einem der Ansprüche 1 bis 6, wobei die Steuereinrichtung (20) eingerichtet ist:
- den Verbrennungsmotor (10) in einer Sonderbetriebsphase zu betreiben, in welcher Emissionsvorgaben mit reduzierter Abgasrückführung erreichbar sind, wobei die Abgasrückführung ohne Beeinträchtigung der Einhaltung von Emissionsvorgaben für die Dauer des Abgleichs reduzierbar ist,
- die Abgasrückführung zu reduzieren,
- die durch den Luftmassensensor (11) erfasste Messgröße einzulesen, die dem Luftmassenstrom entspricht, der dem Verbrennungsmotor (10) zugeführt wird,
- einen Wert für den durch den Verbrennungsmotor (10) strömenden Luftmassenstrom während der Sonderbetriebsphase des Verbrennungsmotors (10) zu errechnen und
- die erfasste Messgröße mit dem von der Steuereinrichtung (20) errechneten Wert für den durch den Verbrennungsmotor (10) strömenden Luftmassenstrom abzugleichen.

8. Steuereinrichtung nach Anspruch 7, **dadurch gekennzeichnet, dass** die Steuereinrichtung (20) eingerichtet ist, den dem Verbrennungsmotor (10) während der Reduzierung der Abgasrückführung (16) zugeführten Luftmassenstrom zum Verringern der Emissionen des Verbrennungsmotors (10) zu regeln.

9. Steuereinrichtung nach einem der Ansprüche 7 oder 8, **dadurch gekennzeichnet, dass** die Steuereinrichtung (20) eingerichtet ist, den dem Verbrennungsmotor (10) zugeführten Luftmassenstrom während des Abgleichs auf einen vorbestimmten Luftmassenstrom zu regeln.

10. Kraftfahrzeug mit einem Verbrennungsmotor (10) und einer Steuereinrichtung (20) nach einem der Ansprüche 7 bis 9 insbesondere zum Durchführen des Verfahrens nach einem der Ansprüche 1 bis 6.

## Claims

1. Method for comparing a measured quantity for an air mass flow as recorded by an air mass sensor (11) of an internal combustion engine (10) with the value for the air mass flow flowing through the internal combustion engine (10) as calculated by a control device (20) of the internal combustion engine (10), wherein the internal combustion engine (10) has an exhaust-gas recirculation device (16) which branches off exhaust gas from an exhaust-gas tract (14) and recirculates said exhaust gas into an intake tract (12) downstream of the air mass sensor (11),
having the method steps:
- operating the internal combustion engine (10) in a special operating phase in which the emissions specifications are attainable with reduced exhaust-gas recirculation, wherein the exhaust-gas recirculation can be reduced without impairment of the compliance with emissions specifications for the duration of the comparison,
- reducing the exhaust-gas recirculation,
- recording the measured quantity by means of the air mass sensor (11), which measurement quantity corresponds to the air mass flow that is fed to the internal combustion engine (10), and
- comparing the recorded measured quantity with the value for the air mass flow flowing through the internal combustion engine (10) as calculated by the control device (20).

2. Method according to Claim 1, **characterized in that** the exhaust-gas recirculation is reduced to a value which corresponds to less than 50%, in particular less than 20%, in particular less than 10% or less than 5% of the value intended for the exhaust-gas recirculation in the present operating range, or **in that** the exhaust-gas recirculation is deactivated.

3. Method according to either of the preceding claims, **characterized in that** the air mass flow fed to the internal combustion engine (10) is, during the reduction of the exhaust-gas recirculation, adjusted by closed-loop control for the purposes of reducing the emissions of the internal combustion engine (10).

4. Method according to any of the preceding claims, **characterized in that** the air mass flow fed to the internal combustion engine (10) is, during the comparison, adjusted to a predetermined air mass flow by closed-loop control.

5. Method according to any of the preceding claims, **characterized in that** idling operation constitutes a special operating phase of the internal combustion engine (10).

6. Method according to any of the preceding claims, **characterized in that** the internal combustion engine (10) has an exhaust-gas aftertreatment device with at least one particle filter (15) for collecting soot that has formed during the combustion, which soot is burned off during a regeneration phase of the particle filter (15), wherein the regeneration phase of the particle filter (15) constitutes a special operating phase of the internal combustion engine (10).

7. Control device of an internal combustion engine for carrying out a method for comparing a measured quantity for an air mass flow as recorded by an air mass sensor (11) of an internal combustion engine (10) with the value for the air mass flow as calculated by the control device (20), in particular according to any of Claims 1 to 6, wherein the control device (20) is configured:
- to operate the internal combustion engine (10) in a special operating phase in which emissions specifications are attainable with reduced exhaust-gas recirculation, wherein the exhaust-gas recirculation can be reduced without impairment of the compliance with emissions specifications for the duration of the comparison,
- to reduce the exhaust-gas recirculation,
- to read in the measured quantity, recorded by means of the air mass sensor (11), which corresponds to the air mass flow that is fed to the internal combustion engine (10),
- to calculate a value for the air mass flow flowing through the internal combustion engine (10) during the special operating phase of the internal combustion engine (10), and
- to compare the recorded measured quantity with the value for the air mass flow flowing through the internal combustion engine (10) as calculated by the control device (20).

8. Control device according to Claim 7, **characterized in that** the control device (20) is configured to adjust the air mass flow fed to the internal combustion engine (10) during the reduction of the exhaust-gas recirculation (16) by closed-loop control for the purposes of reducing the emissions of the internal combustion engine (10).

9. Control device according to either of Claims 7 and 8, **characterized in that** the control device (20) is configured to, during the comparison, adjust the air mass flow fed to the internal combustion engine (10) to a predetermined air mass flow by closed-loop control.

10. Motor vehicle having an internal combustion engine (10) and having a control device (20) according to any of Claims 7 to 9, in particular for carrying out the method according to any of Claims 1 to 6.

## Revendications

1. Procédé de comparaison d'une grandeur de mesure d'un débit de masse d'air détectée par un capteur de masse d'air (11) d'un moteur à combustion interne (10) à la valeur du débit de masse d'air s'écoulant à travers le moteur à combustion interne (10), laquelle a été calculée par un dispositif de commande (20) du moteur à combustion interne (10), le moteur à combustion interne (10) comportant un dispositif de recirculation de gaz d'échappement (16) qui dérive les gaz d'échappement d'une voie de gaz d'échappement (14) et les fait recirculer vers un voie d'admission (12) située en aval du capteur de masse d'air (11),
le procédé comprenant les étapes suivantes :
- faire fonctionner le moteur à combustion interne (10) dans une phase de fonctionnement spéciale dans laquelle les spécifications d'émission peuvent être atteintes avec une recirculation réduite des gaz d'échappement, la recirculation des gaz d'échappement pouvant être réduite pendant la durée de la comparaison sans nuire au respect de spécifications d'émission,
- réduire la recirculation des gaz d'échappement,
- détecter à l'aide du capteur de masse d'air (11) la grandeur de mesure qui correspond au débit de masse d'air qui est amené au moteur à combustion interne (10), et
- comparer la grandeur de mesure détectée à la valeur du débit de masse d'air circulant dans le moteur à combustion interne (10) qui a été calculée par le dispositif de commande (20).

2. Procédé selon la revendication 1, **caractérisé en ce que** la recirculation des gaz d'échappement est réduite à une valeur qui correspond à moins de 50 %, notamment à moins de 20 %, en particulier à moins de 10 % ou à moins de 5 %, de la valeur de la recirculation des gaz d'échappement qui est prévue dans la plage de fonctionnement actuelle ou **en ce que** la recirculation des gaz d'échappement est désactivée.

3. Procédé selon l'une des revendications précédentes, **caractérisé en ce que** le débit de masse d'air amené au moteur à combustion interne (10) est régulé pendant la réduction de la recirculation des gaz d'échappement afin de réduire les émissions du moteur à combustion interne (10).

4. Procédé selon l'une des revendications précédentes, **caractérisé en ce que** le débit de masse d'air amené au moteur à combustion interne (10) est régulé à un débit de masse d'air prédéterminé pendant la comparaison.

5. Procédé selon l'une des revendications précédentes, **caractérisé en ce que** le fonctionnement au ralenti représente une phase de fonctionnement spéciale du moteur à combustion interne (10).

6. Procédé selon l'une des revendications précédentes, **caractérisé en ce que** le moteur à combustion interne (10) comporte un dispositif de post-traitement de gaz d'échappement comprenant au moins un filtre à particules (15) destiné à collecter la suie qui a été formée lors de la combustion et qui est brûlée lors d'une phase de régénération du filtre à particules (15), la phase de régénération du filtre à particules (15) représentant une phase de fonctionnement spéciale du moteur à combustion interne (10) .

7. Dispositif de commande d'un moteur à combustion interne destiné à mettre en œuvre un procédé de comparaison d'une grandeur de mesure d'un débit de masse d'air, qui a été détectée par un capteur de masse d'air (11) d'un moteur à combustion interne (10), à la valeur du débit de masse d'air, qui a été calculée par le dispositif de commande (20), notamment selon l'une des revendications 1 à 6, le dispositif de commande (20) étant adapté :
- pour faire fonctionner le moteur à combustion interne (10) dans une phase de fonctionnement spéciale dans laquelle les spécifications d'émission peuvent être atteintes avec une recirculation des gaz d'échappement réduite, la recirculation des gaz d'échappement pouvant être réduite pendant la durée de la comparaison sans nuire au respect de spécifications d'émission,
- pour réduire la recirculation des gaz d'échappement,
- pour lire la grandeur de mesure qui a été détectée par le capteur de masse d'air (11) et qui correspond au débit de masse d'air qui est amené au moteur à combustion interne (10),
- pour calculer une valeur du débit de masse d'air circulant dans le moteur à combustion interne (10) pendant la phase de fonctionnement spéciale du moteur à combustion interne (10) et
- pour comparer la grandeur de mesure à la valeur du débit de masse d'air s'écoulant à travers le moteur à combustion interne (10), laquelle a été calculée par le dispositif de commande (20).

8. Dispositif de commande selon la revendication 7, **caractérisé en ce que** le dispositif de commande (20) est adapté pour réguler le débit de masse d'air amené au moteur à combustion interne (10) pendant la réduction de la recirculation des gaz d'échappement (16) afin de réduire les émissions du moteur à combustion interne (10).

9. Dispositif de commande selon l'une des revendications 7 et 8, **caractérisé en ce que** le dispositif de commande (20) est adapté pour réguler le débit de masse d'air, amené au moteur à combustion interne (10), à un débit de masse d'air prédéterminé pendant la comparaison.

10. Véhicule automobile comprenant un moteur à combustion interne (10) et un dispositif de commande (20) selon l'une des revendications 7 à 9, notamment pour mettre en œuvre le procédé selon l'une des revendications 1 à 6.
